(19) Europäisches Patentamt
European Patent Office
Office européen des brevets

(11) Publication number : **0 243 880**
**B1**

(12) **EUROPEAN PATENT SPECIFICATION**

(45) Date of publication of patent specification : **24.01.90**

(51) Int. Cl.$^5$ : **C 01 B 33/02**

(21) Application number : **87105962.2**

(22) Date of filing : **23.04.87**

(54) **Silicon carbide as a raw material for silicon production.**

(30) Priority : **29.04.86 US 857207**

(43) Date of publication of application :
**04.11.87 Bulletin 87/45**

(45) Publication of the grant of the patent :
**24.01.90 Bulletin 90/04**

(84) Designated contracting states :
**DE FR GB**

(56) References cited :
**EP-A- 0 177 894**
**EP-A- 0 208 567**
**FR-A- 1 310 789**
**US-A- 3 215 522**
**ELEKTROWÄRME INTERNATIONAL, vol. 34, no. B2, April 1976, pages B81-B84, Essen, DE; G. RATH et al.: "Erzeugung von hochprozentigem Ferrosilicium und Silicium-Metall im Elektroreduktionsofen"**
**CHEMICAL ABSTRACTS, vol. 82, no. 24, 16th June 1975, page 180, abstract no. 159017a, Columbus, Ohio, US; & JP-A-74 37 686 (SHOWA DENKO K.K.) 11-10-1974**
**CHEMICAL ABSTRACTS, vol. 69, no. 12, 16th September 1968, page 456, abstract no. 48877t, Columbus, Ohio, US; V.G. BORISOV: "Reaction of silicon dioxide with silicon carbide at 1870-2670 degrees K.", & TR. VSES. INST. NAUC.-ISSLED.PROEKT. RAB. OGNCUPOR. PROM. 1967, no. 39, 128-45 (RUSS) FROM REF, ZH., KHIM.. 1968, ABSTR. No. 4M16**

(73) Proprietor : **DOW CORNING CORPORATION**
**P.O. Box 1767**
**Midland Michigan 48640 (US)**

(72) Inventor : **Dosaj, Vishu Dutt**
**705 Sylvan Lane**
**Midland Michigan (US)**
Inventor : **Rauchholz, Alvin William**
**1434 S. Orr Road**
**Hemlock Michigan (US)**
Inventor : **YOUNG Martin David**
**365, North 5 Miles Road**
**Midland, Michigan, 48640 (US)**

(74) Representative : **Sternagel, Hans-Günther, Dr. et al**
**Patentanwälte Dr. Michael Hann Dr. H.-G. Sternagel**
**Sander Aue 30**
**D-5060 Bergisch Gladbach 2 (DE)**

**EP 0 243 880 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

This invention relates to a process for the carbothermic reduction of silicon dioxide to prepare silicon in which silicon carbide is fed as the total reductant source or as a portion of the reductant input.

At present, silicon is typically produced in a submerged electric arc furnace via the carbothermic reduction of silicon dioxide ($SiO_2$) with a solid carbonaceous reducing agent. The carbonaceous material has typically been in the form of charcoal, coal, coke, wood chips, and the like. The overall reduction reaction can be represented by the equation

$$SiO_2 + 2C = Si + 2CO$$

It is generally recognized that the above reaction in reality involves multiple reactions, the most significant being outlined below :

$$SiO_2 + 3C = SiC + 2CO \quad (1),$$

$$SiO_2 + C = SiO + CO \quad (2),$$

$$SiO + 2C = SiC + CO \quad (3),$$

$$2SiO_2 + SiC = 3SiO + CO \quad (4), \text{ and}$$

$$SiO + SiC = 2Si + CO \quad (5).$$

Muller et al., Scand. J. Metall., 1 (1972), pp. 145-155, describe and define the theoretical equilibrium conditions for the Si-O-C chemical system of the carbothermic reduction of silicon dioxide to form silicon. Reaction (1), supra, is endothermic and is estimated to consume as much as 50 percent of the energy for the overall reduction reaction.

The use of a submerged electric arc furnace for the production of silicon has been used on a commercial basis for many years. More recently the use of a plasma as an energy source for the carbothermic reduction of silicon dioxide has been utilized. The present practice of feeding $SiO_2$ and a solid carbonaceous reducing agent to a submerged electric arc furnace has many shortcomings. Mass transfer is difficult in handling this complex reaction system of solid, molten, and gaseous reactants, intermediates, and products. Heat transfer is also difficult because of the mass transfer problems and the endothermic nature of reaction (1), supra. A further difficulty is the loss of material in the form of volatile silicon monoxide (SiO) with the by-produced gases of the reaction. It is estimated that in present submerged arc furnaces as much as 10 to 20 weight percent of the ultimate silicon yield is lost as SiO. SiO reoxidizes to form solid $SiO_2$. At temperatures of approximately 1500 °C or lower SiO is thought to disproportionate to finely dispersed silicon and $SiO_2$. The finely dispersed silicon and $SiO_2$ can agglomerate as larger solid particles on cool surfaces. As a consequence, SiO that exits with the by-produced gases poses problems not only of material loss but plugging problems throughout the process. Further, the solid particles of silicon and $SiO_2$ are very abrasive. Thus, the presence of solid particles of silicon and $SiO_2$ in the by-produced gases would make recovery of energy value from these gases impractical. $SiO_2$ that escapes from the system poses an environmental problem as an airborne particulate that must be collected and discarded, with considerable difficulty.

The use of silicon carbide (SiC) in place of a solid carbonaceous reducing agent or the use of SiC, supplemented by a solid carbonaceous reducing agent, improves the operation of a furnace to reduce $SiO_2$. Since the formation of SiC is endothermic and consumes as much as 50 percent of the overall energy equired for the reduction reaction, the heat load on the furnace is significantly reduced. The simultaneous melting of $SiO_2$ and contacting with SiC improves mass transfer in silicon reduction furnaces and, thus, furnace process efficiency.

Enger et al., in U.S. -A- 3,887,359, issued June 3, 1975, disclose the feeding of $SiO_2$ and carbon separately in separate zones of an electric arc furnace wherein the reaction gases pass through one or more zones rich in carbon. This invention is an attempt to minimize the losses of SiO. Enger et al., do not disclose a separate operation after the furnace to convert SiO to SiC nor do they disclose the use of SiC as a primary feed to the furnace.

Miller et al., J. Am. Ceram. Soc. (1979) 62 :3-4, pp. 147-149, disclose the reduction of $SiO_2$ with carbon and SiC to form SiO. No mention is made of the formation of silicon.

Dewing et al., in U.S. -A- 4,213,599, issued July 22, 1980, disclose the use of a carbon bed in series with a bed of alumina to scrub the off-gases from the carbothermic reduction of alumina to form aluminum. No disclosure is made of the feed of an aluminum carbide as the primary reductant feed to the furnace. No disclosure is made of the applicability of this technology to the manufacture of silicon.

Kennedy and North, Proc. Br. Ceram. Soc., 33 :Fab. Sci. 3 (1983), pp. 1-15, disclose the production of fine SiC powder by the reaction of SiO with particulate carbon. SiC powder is the desired product. No disclosure is made of the use of SiC to prepare silicon.

From EP-A-177 894 a method of producing metallic silicon is known by reducing quartz or quartzite

with silicon carbide in a submerged arc furnace at high temperature without electrode consumption. The gas volume is lower than that from conventional carbothermal reduction process.

FR-A-1 310 789 respectively the corresponding US-A-3,215,522 relates to a process for the production of silicon metal in an electric furnace. The carbonaceous reducing agent may be cool, coke or silicon carbide. A carrier gas is used to prevent the rising of evolved carbon monoxide gas into the hallow electrode.

It is an objective of the instant invention to improve raw material and energy utilization and subsequently the overall manufacturing cost of silicon.

This object is attained by a process for producing silicon via the carbothermic reduction of silicon dioxide by feeding silicon dioxide and silicon carbide as reducing agent or silicon dioxide, silicon carbide and a solid carbonaceous reducing agent to a furnace as solid reactants in stoichiometric balance for the overall reaction, charging the furnace with an electrical energy source to effect chemical and physical changes to the solid reactants, recovering molten silicon from the furnace, handling the by-produced gases by recovering and recycling to the furnace silicon monoxide and other silicon-containing materials from the by-produced gases, characterized by using the solid reactants in essentially stoichiometric balance for the overall reaction and passing the by-produced gases from the furnace to a bed of carbon to convert the gaseous silicon monoxide to solid silicon carbide and to agglomerate and trap the finely dispersed silicon and silicon dioxide and feeding the carbon, the silicon carbide and the silicon dioxide from the by-produced gases to the furnace and recovering the energy value of the by-produced gases freed from silicon monoxide and other silicon containing materials.

It has been unexpectedly found that in the production of silicon via the carbothermic reduction of $SiO_2$ in an electric furnace the feeding of a mixture of $SiO_2$, SiC, and a solid carbonaceous reducing agent greatly improves the rate of silicon production, comparad to the reaction of $SiO_2$ and a solid carbonaceous reducing agent alone. Additionally, it has been found that the electrical energy consumption for the carbothermic reduction of this SiC-containing mixture is significantly lower than the energy consumption that is required when $SiO_2$ and a carbonaceous material are the feed for the same furnace. These unexpected findings are discussed and illustrated in the examples.

The instant invention will become better understood by those skilled in the art from a consideration of the attached schematic drawing. Figure 1 is a schematic representation to illustrate one embodiment of the instant invention. Figure 1 outlines (a) a silicon furnace with an electrical energy source, (b) a means for feeding the silicon dioxide and silicon carbide reactants to the furnace, (c) a means for removing silicon monoxide or other silicon-containing materials from the by-produced gas stream leaving the furnace, (d) a means for recovering the energy value of the by-produced gas stream, and (e) a means for recovering molten silicon leaving the furnace.

In Figure 1, 1 is a representation of the furnace body. The furnace body 1 can be a refractory-lined, tank-type vessel or the like, known in the art of design of metallurgical equipment. The electrical energy source 2 is integral to the furnace body, it being understood that the position of the energy source is for illustrative purposes and not as a limitation. The electrical energy source may be a submerged electrode (as represented by 2 in Figure 1) ; a transferred arc plasma ; or a non-transferred arc plasma, all of which are known in the art of transferring of electrical energy to silicon furnaces. The solid reactants, silicon dioxide and silicon carbide, are fed to the furnace body 1 and to the electrical energy source 2 as a mixed solid feed stream 3. The mixed feed of solid reactants 3 is fed to thee furnace body 1 by a means 4 for feeding the solid reactants. The means 4 for feeding the solid reactants can be any conventional means such as gravity feed or gas pressure in combination with a gas-lock valve, screw feeders, pneumatic conveyors, and the like. The furnace body 1 is partially filled with a bed 5 of solid reactants. The bed 5 of solid reactants can be silicon carbide alone or a mixture of silicon dioxide and silicon carbide. The product silicon leaves the furnace body 1 as a stream 6 of molten silicon. The stream 6 of molten silicon is recovered by a means 7 for recovering molten silicon. This means 7 for recovering molten silicon can be any such techniques as batch or continuous tapping. A by-produced gas stream 8 leaves the the furnace body 1, it being understood that the position, as shown, of the point at which the by-produced gas stream 8 leaves the furnace body is for illustrative purposes and not as a limitation. The by-produced gas stream 8, which contains gaseous silicon monoxide or finely dispersed silicon and silicon dioxide, is passed to a means for removing these silicon-containing materials from the by-produced gas stream 8. For this particular embodiment of the instant invention this means for removing silicon-containing materials is a carbon bed which is shown to be a cylindrical, tank-type vessel 9, of known design in the art of tank design, filled with a bed 10 of carbon. The bed 10 of carbon converts any silicon monoxide in the by-produced gas stream 8 into silicon carbide, thus effectively removing any silicon monoxide. The bed 10 of carbon would also agglomerate and trap any finely dispersed silicon or silicon dioxide. The bed 10 of carbon so converted to silicon carbide or coated with agglomerated silicon or silicon dioxide may be periodically fed to the furnace body 1 for ultimate conversion to silicon. A solids-free stream 11 of by-produced gases, which stream is composed mainly of carbon monoxide and other combustible gases, is passed on to a means 12 for recovery of the energy value of these combustible gases. This means 12 for energy recovery can be such conventional means as combustion in a steam boiler or combustion in a gas turbine which is coupled to a generator to produce electricity.

Silicon can be successfully produced by the carbothermic reduction of silicon dioxide with silicon

carbide as the sole reductant source. However, the presence of some portion of a solid carbonaceous reducing agent in addition to the silicon carbide is desirable for the carbothermic reduction of silicon dioxide. As an example, silicon carbide is a very dense solid and, as such, a charge of silicon carbide and silicon dioxide in a reducing furnace has a high bulk density. The high bulk density of the furnace charge hinders efficient transfer of electrical energy and results in unstable furnace operation. Addition of a solid carbonaceous reducing agent reduces the bulk density of the furnace charge and facilites more stable operation of the furnace.

Thus, for the purpose of this invention, the silicon carbide can also be a reductant feed with other solid carbonaceous reducing agents. The electrical energy source can be provided by such known means as a submerged arc furnace utilizing a conventional carbon electrode. The submerged arc furnace is the primary commercial process presently utilized to produce silicon via the carbothermic reduction of silicon dioxide and a carbonaceous reducing agent. The energy source can also be provided by a gas plasma. The plasma can be in a transferred arc configuration or a non-transferred arc configuration. Plasmas are known in the art and can be similar to the design of units utilized in smelting of silicon and other metals, primarily steel.

Feeding of the silicon dioxide and silicon carbide and, alternatively, silicon dioxide, silicon carbide, and a solid carbonaceous reducing agent into the furnace and to the electrical energy source can be effected by conventional means such as gravity feed or gas pressure in combination with a gas-lock valve, screw feeders, pneumatic conveyors, and the like. The silicon dioxide and the silicon carbide, and, alternatively, silicon dioxide, silicon carbide, and a solid carbonaceous reducing agent may be fed separately or as a combined mixture by conventional means, as described supra. For separate feeds the control of the proportions of each feed is effected by such known means of control as manual control, automated control, and the like.

The reaction of silicon dioxide and silicon carbide is represented by the following reactions, described supra :

$$2SiO_2 + SiC = 3SiO + CO \quad (4) \quad \text{and}$$

$$SiO + SiC = 2Si + CO \quad (5).$$

Combining reactions (4) and (5) yield an overall reaction,

$$SiO_2 + 2SiC = 3Si + 2CO \quad (6).$$

Therefore, from the above overall reaction (6) the stoichiometric quantities are 2 moles of silicon carbide per mole of silicon dioxide. It is understood that less than the stoichiometric quantity of silicon carbide relative to silicon dioxide can be utilized, however, with the penalty that silicon raw material efficiency will be reduced by loss of unconsumed silicon monoxide. It is further understood that greater than the stoichiometric quantity of silicon carbide relative to silicon dioxide can be utilized, however, with a resultant build-up of silicon carbide in the silicon furnace. For purposes of this invention « essentially in stoichiometric balance for the overall reaction » means that the molar proportion of the silicon carbide relative to silicon dioxide is at or up to 1 to 2 percent above the stoichiometric quantity. In the addition of silicon dioxide, silicon carbide, and a solid carbonaceous reducing agent, « essentially in stoichiometric balance for the overall reaction » means that combined molar proportion of silicon carbide equivalent, from the combined feed of silicon carbide and the carbonaceous reducing agent, relative to the silicon dioxide is at or up to 1 to 2 percent above the stoichiometric quantity. « The silicon carbide equivalent » of the solid carbonaceous reducing agent is defined by the overall reaction of silicon dioxide with carbon and reaction

$$SiO_2 + 2C = Si + 2CO \quad \text{and}$$

$$SiO_2 + 2SiC = 3Si + 2CO \quad (6).$$

These two reactions show that silicon carbide can be supplemented with carbon on an equivalent molar basis.

The silicon dioxide which is fed separately or combined in a mixture with silicon carbide or alternatively in a mixture with silicon carbide and a solid carbonaceous reducing agent is selected from a group which consists of quartz, in its many naturally occurring forms (such as sand), and fused and fume silica in their many forms. The form of the silicon dioxide is selected from a group which consists of powders, granules, lumps, pebbles, pellets, and briquettes.

The silicon carbide which is fed separately or combined in a mixture with silicon dioxide or alternatively in a mixture with silicon dioxide and a solid carbonaceous reducing agent is selected from a group which consists of alpha-silicon carbide and beta-silicon carbide. The form of the silicon carbide is selected from a group which consists of powders, granules, lumps, pebbles, pellets, and briquettes. The

source of silicon carbide can be (1) the reaction of silicon dioxide and carbon, the so-called Atcheson reaction, (2) the reaction of silicon monoxide and carbon, and (3) the heating of rice hulls.

The solid carbonaceous reducing agent which is fed alternatively as a supplement to the silicon carbide is slected from a group which consists of carbon black, charcoal, coal, coke, and wood chips. The form of the solid carbonaceous reducing agent is selected from a group which consists of powders, granules, chips, lumps, pellets, and briquettes.

The mixture of silicon dioxide and silicon carbide and in the alternative silicon dioxide, silicon carbide, and a solid carbonaceous reducing agent can be in the form selected from a group which consists of powders, granules, lumps, pebbles, pellets, and briquettes.

The furnace may be partially filled with one or more of the solid reactants — silicon dioxide, silicon carbide, or alternatively, a solid carbonaceous reducing agent. The solid reactants that partially fill the furnace are in the form selected from a group which consists of powders, granules, lumps, pebbles, pellets, and briquettes. The partial filling of the furnace is considered to allow adequate space to accommodate the formation of solids from the reaction of silicon dioxide and silicon carbide or additionally a carbonaceous reducing agent.

The furnace is designed so that pressures in the range of atmospheric pressure to 6.08 bar (6 atmospheres) can be maintained. Operation of a closed furnace at atmospheric pressure or higher better facilitates the recovering of the by-produced gases after the gases exit the furnace.

« Recovering molten silicon » means any conventional means of removing the molten silicon product from the reaction zone by such known techniques as batch or continuous tapping.

« Handling by-produced gases from the furnace » can be such means as :

(1) disposal by such known means as gas flaring or venting ;

(2) recovering and recycling to the furnace the silicon monoxide and other silicon-containing materials from the by-produced gases, followed by disposal of the gases, as in (1) ; and

(3) recovering and recycling to the furnace the silicon monoxide and other silicon-containing materials from the by-produced gases, followed by recovering the energy value of the by-produced gases now freed of silicon monoxide and other silicon-containing materials.

Direct disposal of the by-produced gases from the furnace by venting or flaring suffers from the air emission difficulties related to silicon dioxide that were discussed.

Recovering the silicon monoxide and other silicon-containing materials from the by-produced gases is desirable since, recovering and recycling of these silicon-containing materials to the furnace maximizes raw material utilization. Additionally, recovering the silicon-containing materials from the by-produced gases would facilitate recovery of the energy value of the by-produced gases, as will be discussed.

The means for recovering silicon monoxide or finely dispersed silicon and silicon dioxide from the by-produced gases is attained by passing the by-produced gases from the furnace to a bed of carbon to convert the gaseous silicon monoxide to solid silicon carbide and to agglomerate and trap the finely dispersed silicon and silicon dioxide. The reaction of silicon monoxide with carbon to form silicon carbide is known in the art. The passing of the by-produced gases from the furnace through a bed of carbon to convert any silicon monoxide to silicon carbide and to agglomerate and trap finely dispersed silicon and silicon dioxide can be effected in any conventional bed configuration such as a packed bed, a fluidized bed, a stirred bed, and the like that will facilitate effective contact of the gaseous silicon monoxide or the finely dispersed silicon and silicon dioxide with the solid carbon. The carbon can be in a form selected from a group which consists of powders, granules, lamps, pellets, and briquettes. The bed of carbon and silicon-containing materials can be discarded or recycled as a feed to the silicon furnace.

Energy recovery is an attractive alternative since the by-produced gases of a silicon furnace are composed of combustible carbon monoxide, hydrocarbons, hydrogen, and other gases.

Before practical recovery of energy from the by-produced gases from a silicon furnace can be considered, removal of gaseous silicon monoxide and finely dispersed silicon and silicon dioxide, from the possible disproportionation of silicon monoxide should be effected. Silicon monoxide and silicon, in a combustible gas stream, are converted to silicon dioxide during combustion in a furnace or boiler. Silicon dioxide is known to fuse at combustion temperatures to a glassy coating and to coat and foul surfaces such as boiler tubes. Silicon dioxide particles are very abrasive and cause severe erosion problems with combustion and heat exchange equipment.

The recovery of the energy value of the gaseous by-products, freed of silicon monoxide, can be effected by known techniques such as combustion in a boiler to produce process steam and combustion in a gas turbine coupled to a generator to produce electricity.

The preferred mode of carrying out the instant invention is to utilize a submerged arc furnace or a furnace utilizing a plasma as the electrical energy source.

The preferred mode of feeding the furnace and its electrical energy source is a single feed stream which is a mixture of silicon dioxide, silicon carbide, and a solid carbonaceous reducing agent. The presence of a solid carbonaceous reducing agent is desirable to maintain the bulk density of the solid charge of solid reactants at a level for stable furnace operation. The proportion of silicon carbide in the total reductant feed is preferably 10 to 90 percent on a molar carbon basis. More preferably, the proportion of silicon carbide in the total reductant feed is 20 to 50 percent on a molar carbon basis.

The silicon dioxide feed is quartz or silica. The silicon carbide can be either alpha-silicon carbide or beta-silicon carbide. The solid carbonaceous reducing agent can be carbon black, charcoal, coal, coke, or wood chips. The feed mixture of silicon dioxide, silicon carbide, and solid carbonaceous reducing agent can be in the form of pellets or briquettes.

The solid reactants with which the furnace is partially filled is a mixture of quartz or silica, alpha-silicon carbide or beta-silicon carbide, and a solid carbonaceous reducing agent.

Handling the by-produced gas stream from the furnace is effected by passing the by-produced gas stream through a bed of carbon to convert silicon monoxide to silicon carbide or to agglomerate and trap finely dispersed silicon and silicon dioxide, followed by recovering the energy value of the by-produced gases, freed of silicon monoxide and other silicon-containing materials, in a steam boiler or a gas turbine. The recovered silicon carbide, silicon, and silicon dioxide, along with excess carbon can be recycled to the furnace to maximize raw material utilization.

The following examples are presented to be illustrative of the instant invention and are not to be construed as limiting the instant invention delineated in the claims.

Comparative Example 1 : (Not within the scope of the invention)

A series of 10 runs was made in a small silicon furnace with conventional charge of silicon dioxide and solid carbonaceous material to establish a baseline against which to compare the results of similar runs employing the instant invention. The silicon furnace utilized was a 200 kVA direct arc reactor.

The raw materials utilized were :

1. Silicon dioxide as quartz from two sources, British Columbia white quartz and North Carolina gravel
2. Coal from sources in Kentucky and Oklahoma
3. Green petroleum coke from two sources, Koch Carbon Company, Oak Brooke, Illinois, and Great Lakes Carbon Company, Niagara Falls, New York
4. Hard and soft woodchips

The silicon dioxide and solid carbonaceous materials were mixed together and fed to the silicon furnace in discrete charges with the following composition :

| Material | Wt., kg. |
|---|---|
| Quartz | 6.0 |
| Coal | 2.5 |
| Coke | 0.5 |
| Wood Chips | 2.3 |

The following general procedure was followed in carrying out the individual runs in this series :

1. The furnace was loaded with three to four charges of silicon dioxide/carbonaceous material mix
2. The power level was slowly brought up to 100 kW
3. At approximately every 150 kWh of energy fed to the furnace or approximately every 1.5 to 2 hours
   a. the molten silicon was tapped
   b. the furnace wass stoked
   c. another charge was added to the furnace
4. « Equilibrium » or steady state conditions were measured after the run had proceeded for 24 hrs.

As noted above, the runs were allowed to proceed for 24 hours to reach an « equilibrium » or steady state condition. Total run time varied, but steady state conditions were generally maintained from 30 to 40 hours. From the data collected from these 10 runs, three measures of reactor performance were computed. These measures of performance, the definition of these measures of performance, and the values of the particular measurements are listed below :

Energy Consumption — Kilowatt-hours of electricity required to produce one kilogram of silicon (kWh/kg Si) = 30.2 ± 3.5

Percent Silicon Yield — (Kilograms of silicon recovered/kilograms of combined silicon in the feed) × 100 = 72.2 ± 5.2

Production Rate — Kilograms of silicon produced per hour = 2.48 = 0.27

These results are baseline conditions upon which the results of the following examples are compared

Example 2

A run was made in which beta-silicon carbide was substituted for a portion of the carbonaceous material fed to a silicon furnace. The furnace utilized was the same 200 kVA direct arc furnace utilized in Example 1.

The law materials used were :

1. Sand from a source in Oklahoma
2. Lump quartz as Mt. Rose quartz from a source in British Columbia. Lump size was up to 2 1/2".
3. Beta-Silicon carbide granules manufactured by Ultra Carbon Corp., Bay City, Michigan.

4. The coal used was Joyner Blue Gem Coal purchased from Hickman-Williams & Co., Kentucky. The coal was used in lump form or ground for briquetting.

5. Woodchips were a mix of hard and soft wood purchased from Morbark of Winn, Michigan. Chip sizes up to 37.6 mm (1 1/2") were used.

The operating procedures used in this run were essentially the same as those used in Example 1. However, the furnace run was begun with a furnace charge of silicon dioxide and carbonaceous materials, similar to charge material utilized in Example 1. Once the furnace run was established, the charge was changed to a charge containing beta-silicon carbide. The beta-silicon carbide-containing charges consisted of a mixture of (a) lump Mt. Rose quartz, (b) briquettes of a mixture of coal, beta-silicon carbide, and sand, and (c) wood chips. The composition of the beta-silicon carbide-containing charge is given below :

| Material | Wt., kg |
|---|---|
| Quartz | 2.7 |
| Briquettes | |
| Coal | 1.5 |
| Beta-SiC | 1.3 |
| Sand | 1.4 |
| Wood Chips | 2.5 |

Again, as in Example 1, the run was allowed to proceed for 24 hours to reach an « equilibrium » or steady state. The results of steady state operation were :

Energy Consumption = 18.11 kWh/kg Si

Silicon Yield = 73.71 %

Production Rate = 3.99 kg Si/hr

These above results demonstrate that the use of beta-silicon carbide as a portion of the solid reducing agents in a silicon furnace charge significantly reduces the energy consumption to produce silicon and significantly increases the silicon production rate compared to the standard feeding of silicon dioxide and carbonaceous reducing agents.

## Example 3

A silicon furnace run was made in which alpha-silicon carbide was substituted for a portion of the carbonaceous material fed with silicon dioxide.

The raw materials used in this run were the same as those used in Example 2, except that alpha-silicon carbide was used in place of beta-silicon carbide. The alpha-silicon carbide used purchased from General Abrasive, a Division of Dresser Corp., Niagara Falls, New York. The alpha-silicon carbide was in the form a material 10 grit and finer (75 % (0.221 mm (70-mesh) or larger).

The silicon furnace was started with an alpha-silicon carbide-containing charge which was a mixture of (a) lump Mt. Rose quartz, (b) briquettes which consisted of a mixture of coal, alpha-silicon carbide, and sand, and (c) wood chips. The alpha-silicon carbide-containing charge fed to the furnace had the following composition :

| Material | Wt., kg |
|---|---|
| Quartz | 2.8 |
| Briquettes | |
| Coall | 1.4 |
| Alpha-SiC | 1.2 |
| Sand | 1.3 |
| Wood Chips | 1.9 |

Again, as in Example 1, the run was allowed to proceed for 24 hours to reach an « equilibrium » or steady state. The results of steady state operation were :

Energy Consumption = 15.68 kWh/kg Si

Silicon Yield = 81.64 %

Production Rate = 4.44 kg Si/hr

These above results demonstrate that the use of alpha-silicon carbide as a portion of the solid reducing agents in a silicon furnace charge significantly reduces the energy consumption to produce silicon and significantly increases the silicon production rate compared to the standard feeding of silicon dioxide and carbonaceous reducing agents. These results also demonstrate that similar results are attained in substituting either alpha-silicon carbide or beta-silicon carbide for a portion of the carbonaceous material fed to a silicon furnace.

Table 1 is a summary of the results of Examples 1, 2 and 3. « Energy Consumption » is expressed as kilowatt-hours/kilogram of silicon. « Production Rate » is expressed as kilograms of silicon/hour.

Table 1

| Example | Energy Consumption | Production Rate |
|---|---|---|
| 1 | 30.2 ± 3.5 | 2.48 ± 0.27 |
| 2 | 18.11 | 3.99 |
| 3 | 15.68 | 4.44 |

## Claims

1. A process for producing silicon via the carbothermic reduction of silicon dioxide by feeding silicon dioxide and silicon carbide as reducing agent or silicon dioxide, silicon carbide and a solid carbonaceous reducing agent to a furnace as solid reactants in stoichiometric balance for the overall reaction, charging the furnace with an electrical energy source to effect chemical and physical changes to the solid reactants, recovering molten silicon from the furnace, handling the by-produced gases by recovering and recycling to the furnace silicon monoxide and other silicon-containing materials from the by-produced gases, characterized by using the solid reactants in essentially stoichiometric balance for the overall reaction and passing the by-produced gases from the furnace to a bed of carbon to convert the gaseous silicon monoxide to solid silicon carbide and to agglomerate and trap the finely dispersed silicon and silicon dioxide and feeding the carbon, the silicon carbide and the silicon dioxide from the by-produced gases to the furnace and recovering the energy value of the by-produced gases freed from silicon monoxide and other silicon containing materials.

2. The process of Claim 1 wherein the silicon carbide is alpha-silicon carbide or beta-silicon carbide.

3. The process of Claims 1 or 2 wherein the silicon dioxide, silicon carbide and solid carbonaceous reducing agent are fed to the furnace and to the electrical energy source as separate feeds.

4. The process of Claims 1 or 2 wherein the silicon dioxide, silicon carbide and solid carbonaceous reducing agent are fed to the furnace and to the electrical energy source as a combined mixture.

5. The process of any of Claims 1 to 4 wherein the solid reactants are fed to the furnace and to the electrical energy source in the form of powders, granules, lumps, pebbles, pellets or briquettes.

6. The process of any of Claims 1 to 5 wherein the furnace is a furnace in which the electrical energy source is a transferred arc plasma.

7. The process of any of Claims 1 to 5 wherein the furnace is a furnace in which the electrical energy source is a non-transferred arc plasma.

## Patentansprüche

1. Verfahren zum Herstellen von Silizium durch carbothermische Reduktion von Siliziumdioxid durch Einbringen von Siliziumdioxid und Siliziumcarbid als Reduktionsmittel oder Siliziumdioxid, Siliziumcarbid und einem festen kohlenstoffhaltigen Reduktionsmittel in einen Schmelzofen als feste Reaktionspartner in stöchiometrisch ausgeglichenem Verhältnis für die Gesamtreaktion, Beschicken des Schmelzofens mit einer elektrischen Energiequelle, um die chemischen und physikalischen Umwandlungen der festen Reaktionspartner auszulösen, Gewinnen geschmolzenen Siliziums aus dem Schmelzofen, Ausnutzen der Nebenproduktgase durch Rückgewinnen und Rückführen von Siliziummonoxid und anderer siliziumhaltiger Stoffe aus den Nebenproduktgasen in den Schmelzofen, gekennzeichnet durch Verwenden der festen Reaktionspartner in im wesentlichen stöchiometrisch ausgeglichenem Verhältnis für die Gesamtreaktion und Hindurchleiten der Nebenproduktgase aus dem Schmelzofen durch ein Kohlenstoffbett, um gasförmiges Siliziummonoxid in festes Siliziumcarbid umzuwandeln und um feinteilig dispergiertes Silizium und Siliziumdioxid zu agglomerieren und abzuscheiden, und Einbringen des Kohlenstoffs, des Siliziumcarbids und des Siliziumdioxids aus den Nebenproduktgasen in den Schmelzofen und Rückgewinnen der Energie aus den von Siliziummonoxid und anderen siliziumhaltigen Stoffen befreiten Nebenproduktgasen.

2. Verfahren nach Anspruch 1, dadurch gekennzeichnet, daß das Siliziumcarbid alpha-Siliziumcarbid oder beta-Siliziumcarbid ist.

3. Verfahren nach Ansprüchen 1 oder 2, dadurch gekennzeichnet, daß das Siliziumdioxid, Siliziumcarbid und das feste kohlenstoffhaltige Reduktionsmittel in den Schmelzofen und die elektrische Energiequelle als separate Ströme eingebracht werden.

4. Verfahren nach Ansprüchen 1 oder 2, dadurch gekennzeichnet, daß das Siliziumdioxid, Siliziumcarbid und das feste kohlenstoffhaltige Reduktionsmittel in den Schmelzofen und die elektrische Energiequelle als kombinierte Mischung eingebracht werden.

5. Verfahren nach jedem der Ansprüche 1-4, dadurch gekennzeichnet, daß die festen Reaktionspartner in den Schmelzofen und die elektrische Energiequelle in Form von Pulvern, Granulaten, Klumpen, Geröll, Pellets oder Briketts eingebracht werden.

6. Verfahren nach jedem der Ansprüche 1-5, dadurch gekennzeichnet, daß der Schmelzofen ein solcher ist, bei dem die elektrische Energiequelle ein übertragener Plasmalichtbogen ist.

7. Verfahren nach jedem der Ansprüche 1-5, dadurch gekennzeichnet, daß der Schmelzofen ein solcher ist, bei dem die elektrische Energiequelle ein nicht übertragener Plasmalichtbogen ist.

**Revendications**

1. Un procédé pour la production de silicium par réduction carbothermique du bioxyde de silicium, consistant à alimenter un four avec du bioxyde de silicium et du carbure de silicium comme agent réducteur ou du bioxyde de silicium, du carbure de silicium et un agent réducteur carboné solide, en tant que corps réagissants solides, en équilibre stoechiométrique pour la réaction globale, à charger le four avec une source d'énergie électrique pour faire subir des modifications chimiques et physiques aux corps réagissants solides, à retirer du silicium fondu du four et à traiter les gaz formés comme sous-produits en récupérant et en recyclant vers le four le monoxyde de silicium et autres matières siliciées provenant des gaz formés comme sous-produits, caractérisé en ce que l'on utilise les corps réagissants solides en équilibre essentiellement stoechiométrique pour la réaction globale, on fait passer les gaz formés comme sous-produits du four à un lit de carbone pour convertir le monoxyde de silicium gazeux en carbure de silicium solide et pour agglomérer et piéger le silicium et le bioxyde de silicium finement dispersés, et on alimente le four avec le carbone, le carbure de silicium et le bioxyde de silicium provenant des gaz formés comme sous-produits et l'on récupère l'énergie utile des gaz formés comme sous-produits débarrassés du monoxyde de silicium et autres matières siliciées.

2. Le procédé de la revendication 1, dans lequel le carbure de silicium est du carbure de silicium alpha ou du carbure de silicium bêta.

3. Le procédé de la revendication 1 ou 2, dans lequel le bioxyde de silicium, le carbure de silicium et l'agent réducteur carboné solide sont envoyés au four et à la source d'énergie électrique sous forme d'alimentations séparées.

4. Le procédé de la revendication 1 ou 2, dans lequel le bioxyde de silicium, le carbure de silicium et l'agent réducteur carboné solide sont envoyés au four et à la source d'énergie électrique sous forme d'un mélange combiné.

5. Le procédé de l'une quelconque des revendications 1 à 4, dans lequel les corps réagissants solides sont envoyés au four et à la source d'énergie électrique sous forme de poudres, granulés, morceaux, galets, pastilles ou briquettes.

6. Le procédé de l'une quelconque des revendications 1 à 5, dans lequel le four est un four où la source d'énergie électrique est un plasma d'arc transféré.

7. Le procédé de l'une quelconque des revendications 1 à 5, dans lequel le four est un four où la source d'énergie électrique est un plasma d'arc non transféré.

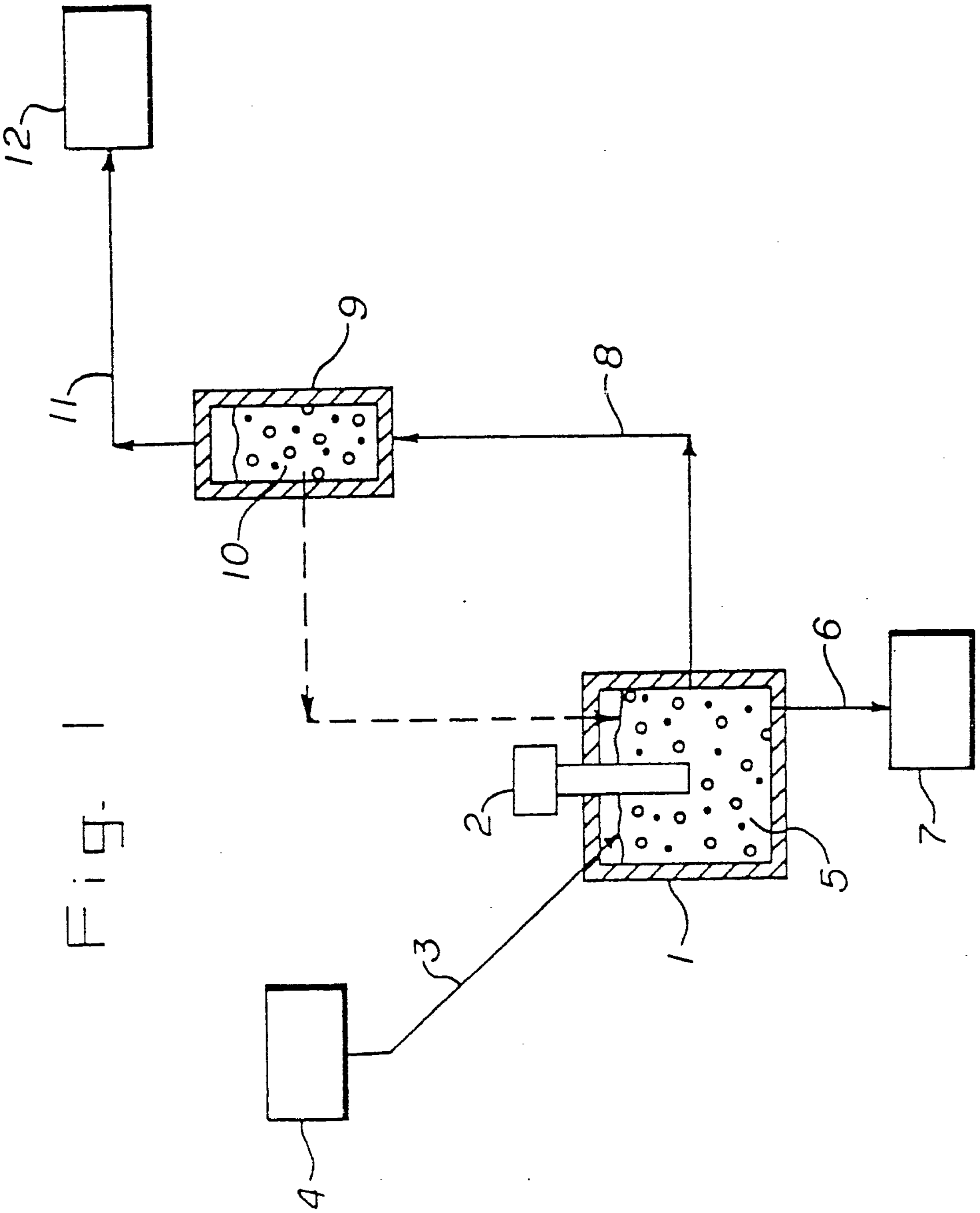


Fig. 1